# EUROPÄISCHE PATENTSCHRIFT

(11) **EP 3 460 017 B1**
(45) Veröffentlichungstag und Bekanntmachung des Hinweises auf die Patenterteilung: **19.08.2020**
(21) Anmeldenummer: 18193965.3
(22) Anmeldetag: 12.09.2018
(51) Int. Cl.: C09J 7/29, B65H 19/10

(54) **KLEBEBAND FÜR DEN FLIEGENDEN ROLLENWECHSEL**
FLYING SPLICE ADHESIVE TAPE
RUBAN ADHÉSIF DE RACCORDEMENT VOLANT

(30) Priorität: 26.09.2017 DE 102017217094
(43) Veröffentlichungstag der Anmeldung: 27.03.2019
(73) Patentinhaber: tesa SE, 22848 Norderstedt (DE)
(72) Erfinder: CZERWONATIS, Niels, 22393 Hamburg (DE); WALPER, Marco, 22848 Norderstedt (DE)

(56) Entgegenhaltungen:
- EP-A1- 2 048 212
- EP-A1- 3 124 565

## Beschreibung

Die Erfindung betrifft ein Klebeband für den fliegenden Rollenwechsel von auf Rollen aufgewickeltem Flachbahnmaterial mit einer Trägerschicht, welche eine erste Oberfläche und eine der ersten Oberflächen gegenüberliegende zweite Oberfläche aufweist, einer ersten Klebmassenschicht, welche auf der ersten Oberfläche der Trägerschicht mittelbar oder unmittelbar zumindest teilflächig angeordnet ist, einer zweiten Klebmassenschicht, welche auf zumindest einem Flächenbereich der zweiten Oberfläche der Trägerschicht angeordnet ist, und mindestens einer Sollbruchfläche zum flächigen Spalten des Klebebands, wobei die Sollbruchfläche derart ausgebildet ist, dass der zumindest eine Flächenbereich eine Oberflächenbeschichtung aufweist, welche zwischen der Trägerschicht und der zweiten Klebmassenschicht angeordnet ist, wobei die Adhäsionskräfte der zweiten Klebmassenschicht zur Oberflächenbeschichtung größer sind als die Adhäsionskräfte der Oberflächenbeschichtung zur Trägerschicht, und/oder wobei die Adhäsionskräfte der zweiten Klebmassenschicht zur Oberflächenbeschichtung größer sind als die Kohäsionskräfte innerhalb der Oberflächenbeschichtung. Weiter betrifft die Erfindung ein Flachbahnmaterial, welches auf einer Rolle aufgewickelt ist und ein derartiges Klebeband aufweist. Ferner betrifft die Erfindung eine Verwendung eines derartigen Klebebands.

### Stand der Technik

Ein entsprechendes Klebeband ist aus der DE 10 2015 214 193 A1 bekannt. Der fliegende Rollenwechsel ist in Papierfabriken oder dergleichen ein gängiges Verfahren, um eine alte, fast abgespulte Rolle eines Flachbahnmaterials durch eine neue zu ersetzen, ohne die schnell laufenden Maschinen anhalten zu müssen. Auf den Anfangsbereich eines auf eine Rolle aufgewickelten Flachbahnmaterials wird das Klebeband aufgebracht, wobei das Klebeband mit seiner ersten Klebmassenschicht und mit seiner zweiten Klebmassenschicht mit dem Flachbahnmaterial durch Verkleben verbunden wird. Das Abwickeln des Flachbahnmaterials einer neuen Rolle, welche eine alte Rolle, auf welchem das Flachbahnmaterial fast vollständig abgewickelt ist, ersetzen soll, heißt "fliegender Rollenwechsel", wenn es bei laufendem Flachbahnmaterial erfolgt. Dabei wird das mit dem Flachbahnmaterial der neuen Rolle verbundene Klebeband im Bereich der Sollbruchfläche derart gespalten, dass sich die zweite Klebmassenschicht von der Trägerschicht löst. Bei diesem Vorgang verbleiben die erste Klebmassenschicht und die Trägerschicht an einem ersten Bereich des Flachbahnmaterials, und die zweite Klebmassenschicht und die auf der zweiten Klebmassenschicht aufgebrachte Oberflächenbeschichtung verbleiben an einem von dem ersten Bereich beabstandet angeordneten zweiten Bereich des Flachbahnmaterials. Der erste Bereich des Flachbahnmaterials der neuen Rolle deckt die erste Klebmassenschicht nur teilweise ab. Der nicht von dem Flachbahnmaterial der neuen Rolle abgedeckte Bereich der ersten Klebmassenschicht klebt am Flachbahnmaterial der alten Rolle, wohingegen die zweite Klebmassenschicht an dem Flachbahnmaterial der neuen Rolle klebt. Die zweite Klebmassenschicht sollte nach dem Spalten durch die Oberflächenbeschichtung komplett abgedeckt, um das Risiko eines Bahnabrisses durch eine freiliegende Klebmasse zu vermeiden. Durch das Klebeband mit seinen zwei sich gegenüberliegenden Klebmassenschichten kann sichergestellt werden, dass es vor einem Rollenwechsel nicht zu einem Abwickeln des Flachbahnmaterials der neuen Rolle kommt, da das Flachbahnmaterial über den speziellen Aufbau des Klebebands zusammengehalten wird. Sobald die neue Rolle die alte Rolle ersetzen soll und es zu dem "fliegenden Rollenwechsel" kommt, soll die Sollbruchfläche des Klebebands ein kontrolliertes und definiertes Öffnen und Abwickeln des Flachbahnmaterials der neuen Rolle sicherstellen.

### Darstellung der Erfindung: Aufgabe, Lösung, Vorteile

Es ist die Aufgabe der vorliegenden Erfindung, ein Klebeband sowie ein Flachbahnmaterial mit einem derartigen Klebeband zur Verfügung zu stellen, bei welchen das Spalten des Klebebands im Bereich der Sollbruchfläche weiter verbessert werden kann.

Diese Aufgabe wird mit den Merkmalen der unabhängigen Ansprüche gelöst. Vorteilhafte Ausgestaltungen und Weiterbildungen der Erfindung sind in den abhängigen Ansprüchen angegeben.

Das Klebeband gemäß der Erfindung zeichnet sich dadurch aus, dass die zweite Klebmassenschicht an einer in Richtung Trägerschicht zeigenden Oberfläche einen deaktivierten Klebebereich aufweist.

In dem deaktivierten Klebebereich weist die zweite Klebmassenschicht, insbesondere die in Richtung der Trägerschicht zeigende Oberfläche der zweiten Klebmassenschicht, keine Klebwirkung auf. Dadurch ist in dem deaktivierten Klebebereich die stoffschlüssige Verbindung der zweiten Klebmassenschicht mit der Oberflächenbeschichtung und/oder der Trägerschicht aufgehoben. Durch den deaktivierten Klebebereich wird eine Art Überstand der zweiten Klebmassenschicht im Bereich der Sollbruchfläche erreicht. Durch diesen Überstand kann das Spaltverhalten im Bereich der Sollbruchfläche verbessert werden, da der Beginn bzw. Start des Spaltens im Bereich der Sollbruchfläche durch den Überstand noch definierter und kontrollierter erfolgen kann. Der durch den deaktivierten Klebebereich ausgebildete Überstand stellt eine Art Aktivierungsbereich für das Spalten des Klebebands im Bereich der Sollbruchfläche dar, so dass ein Riss gezielt und definiert in die Spaltebene der Sollbruchfläche eingeleitet werden kann. Diese Anspalthilfe begünstigt ein noch sicheres und sanfteres Anspalten im Bereich der Sollbruchfläche, wodurch insbesondere auch die Wahrscheinlichkeit eines fehlerhaften Anspaltens reduziert werden kann. Die Ausbildung des deaktivierten Klebebereichs kann dadurch realisiert werden, dass vor dem Aufbringen, insbesondere Auflaminieren, der zweiten Klebmassenschicht auf die Oberflächenbeschichtung und damit auf die Trägerschicht die Klebwirkung der in Richtung der Trägerschicht zeigenden Oberfläche der zweiten Klebmassenschicht bereichsweise deaktiviert bzw. aufgehoben wird. Die Oberflächenbeschichtung kann die gesamte oder auch nur eine Teilfläche der zweiten Klebmassenschicht ausmachen.

Um ein besonders gutes Anspaltverhalten erreichen zu können, ist der deaktivierte Klebebereich bevorzugt angrenzend zu einem sich in Längsrichtung des Klebebands erstreckenden Kantenbereich der zweiten Klebmassenschicht angeordnet.

Die zweite Klebmassenschicht ist bevorzugt beabstandet zu einem sich in Längsrichtung des Klebebands erstreckenden Kantenbereich der Trägerschicht angeordnet. Dieser Abstand bildet eine Art Einrückung der zweiten Klebmassenschicht relativ zu der dem Kantenbereich der Trägerschicht aus. Die zweite Klebmassenschicht schließt damit vorzugsweise nicht bündig mit dem Kantenbereich der Trägerschicht ab, sondern ist mit einem Abstand zu dem Kantenbereich der Trägerschicht angeordnet. Der Abstand A kann vorzugsweise 0,5 mm ≤ A ≤ 5 mm, bevorzugt 1 mm ≤ A ≤ 3 mm sein. Durch den Abstand der zweiten Klebmassenschicht zu dem sich in Längsrichtung des Klebebands erstreckenden Kantenbereich der Trägerschicht kann das Spaltverhalten, insbesondere das Anspalten, der Sollbruchfläche weiter verbessert werden. Durch den Abstand bzw. die Einrückung kann eine erforderliche Kraftspitze beim Anspalten reduziert werden. Zur Überwindung der Spaltfestigkeit an der vorderen Kante wird dabei eine erhöhte, maximale Kraft zum Anspalten des Systems benötigt (Anspaltkraft, Initialspaltkraft zum Einleiten des Spaltvorgangs der Sollbruchstelle). Des Weiteren benötigt man eine Kraft auf niedrigerem Niveau zum Spalten über die gesamte Breite des Splicebandes (Weiterspaltkraft). Das Produkt aus der aufgewendeten Kraft und der Breite des Spaltsystems ist die Arbeit, die zum Spalten benötigt wird (Spaltarbeit). Die Anspaltkraft sollte so hoch eingestellt sein, dass das Produkt durch die bei der Beschleunigung wirkenden Fliehkräfte und aerodynamischen Kräfte nicht vorzeitig öffnet, zum anderen muss die Spaltarbeit so gering eingestellt sein, dass die benötigte Arbeit für das komplette Durchspalten des Sollbruchfläche nicht zu Abrissen führt. Durch die Ausgestaltung der erfindungsgemäßen Klebebänder lassen sich für diese Parameter hervorragende Werte realisieren.

Um ein gleichmäßiges Spaltverhalten der Sollbruchfläche über die gesamte Länge der Sollbruchfläche erreichen zu können, erstreckt sich der deaktivierte Klebebereich vorzugsweise über die gesamte Länge der zweiten Klebmassenschicht. Alternativ ist es aber auch möglich, dass sich der deaktivierte Klebebereich abschnittsweise und damit nur teilflächig über die Länge der zweiten Klebmassenschicht erstreckt. Die Länge der Sollbruchfläche und die Länge der Klebmassenschicht erstrecken sich in Längsrichtung des Klebebandes.

Der deaktivierte Klebebereich erstreckt sich vorzugsweise über einen Teilbereich der Gesamtbreite der zweiten Klebmassenschicht. Bevorzugt weist der deaktivierte Klebebereich dabei eine Breite b_{dK} auf, welche kleiner ist als die Hälfte der Gesamtbreite bs der zweiten Klebmassenschicht. Hierdurch kann trotz eines verbesserten Spaltverhaltens der Sollbruchfläche noch eine ausreichend gute Klebewirkung der zweiten Klebmassenschicht hin zu der Oberflächenbeschichtung und/oder der Trägerschicht gewährleistet werden, um vor dem Spaltvorgang an der Sollbruchfläche ein Abwickeln des Flachbahnmaterials sicher verhindern zu können.

Der deaktivierte Klebebereich kann eine Breite von 0,5 mm ≤ b_{dK} ≤ 5 mm, bevorzugt von 1 mm ≤ b_{dK} ≤ 3 mm aufweisen. Besonders bevorzugt weist der deaktivierte Klebebereich eine Breite von 1,5 mm ≤ b_{dK} ≤ 2,5 mm auf.

Der deaktivierte Klebebereich an der Oberfläche der zweiten Klebmassenschicht, die in Richtung der Sollbruchfläche zeigt, kann durch verschiedene Art und Weisen ausgebildet werden.

Beispielsweise kann der deaktivierte Klebebereich durch Aufbringen einer Farbe oder eines Lacks auf die in Richtung Trägerschicht zeigende Oberfläche der zweiten Klebmassenschicht ausgebildet sein. Diese Farben oder Lacke können beispielsweise sogenannte UV-Lacke oder UV-Farben sein. Es sind aber auch andere vernetzende oder trocknende, beispielsweise lufttrocknende, Farben oder Lacke einsetzbar. Durch das Aushärten der Farbe oder des Lacks entsteht eine permanente Sperrschicht, wodurch eine Deaktivierung des Klebebereichs erreicht werden kann. Das Aufbringen der Farbe oder des Lacks kann beispielsweise durch ein Bedruckungsverfahren, zum Beispiel mittels eines Druckwerks oder Inkjets, erfolgen. Ferner kann die Farbe oder der Lack auch aufgestrichen werden, zum Beispiel mittels in einer Halterung angeordneten Stiften. Hierbei kann eine besonders geringe Dicke im µm-Bereich erreicht werden. Zudem ist eine Deaktivierung in einem Teilbereich möglich. Jegliche andere Auftragsverfahren können ebenfalls eingesetzt werden.

Weiter kann der deaktivierte Klebebereich durch Aufbringen eines bahnförmigen, nicht klebenden Materialstreifens auf die in Richtung Trägerschicht zeigende Oberfläche der zweiten Klebmassenschicht ausgebildet sein. Der Materialstreifen kann beispielsweise aus einem Kunststoffmaterial oder aber auch aus einem Metallmaterial ausgebildet sein. Beispielsweise kann der Materialstreifen ein Folienstreifen, wie beispielsweise eine Aluminiumfolie oder eine PET-Folie sein. Der Materialstreifen sollte eine möglichst geringe Dicke aufweisen. Beispielsweise kann der Materialstreifen eine Dicke von ca. 2 µm aufweisen. Aufgebracht werden kann der Materialstreifen beispielsweise durch Auflaminieren, wodurch eine vollständige Abdeckung und damit eine besonders gute Deaktivierung der zweiten Klebmassenschicht erreichbar ist.

Ferner kann der deaktivierte Klebebereich durch Aufbringen eines Pudermaterials auf die in Richtung Trägerschicht zeigende Oberfläche der zweiten Klebmassenschicht ausgebildet sein. Als Pudermaterial kann beispielsweise Talkum, Kreide, Calciumcarbonat, Kaolin, usw. verwendet werden. Das Aufbringen des Pudermaterials kann beispielsweise durch ein Bepudern erfolgen, wodurch eine besonders dünne Aufbringung erreicht werden kann und auch eine Deaktivierung in Teilbereichen möglich ist.

Auch ist es möglich, dass die zweite Klebmassenschicht durch Übervernetzung mittels einer Bestrahlung der in Richtung Trägerschicht zeigenden Oberfläche zu deaktivieren. Die Bestrahlung der Oberfläche der zweiten Klebmassenschicht erfolgt vorzugsweise mittels eines ultravioletten Lichts, um den Vernetzungsvorgang der Oberfläche der zweiten Klebmassenschicht auszulösen. Durch die Vernetzung der Oberfläche der zweiten Klebmassenschicht kann in den Bereichen der Bestrahlung die Klebwirkung der zweiten Klebmassenschicht aufgehoben werden, so dass der deaktivierte Klebebereich ausgebildet werden kann. Bei dieser Art der Ausbildung des deaktivierten Klebebereichs ist es daher nicht notwendig, ein zusätzliches Material auf die zweite Klebmassenschicht aufzubringen, um die Klebwirkung aufzuheben.

Die Lösung der erfindungsgemäßen Aufgabe erfolgt ferner mittels eines Flachbahnmaterials, welches auf eine Rolle aufgewickelt ist, wobei das Flachbahnmaterial ein wie vorstehend beschrieben, aus- und weitergebildetes Klebeband aufweist.

Weiter ist erfindungsgemäß die Verwendung eines wie vorstehend beschriebenen, aus- und weitergebildeten Klebebands für einen fliegenden Rollenwechsel vorgesehen.

### Kurze Beschreibung der Zeichnungen

Weitere, die Erfindung verbessernde Maßnahmen werden nachstehend gemeinsam mit der Beschreibung einer bevorzugten Ausgestaltung der Erfindung anhand der Figuren näher dargestellt. Es zeigen:
- Fig. 1: eine schematische Darstellung eines Klebebands gemäß der Erfindung,
- Fig. 2: eine weitere schematische Darstellung des Klebebands gemäß der Erfindung, und
- Fig. 3a bis 3e: eine schematische Darstellung eines Flachbahnmaterials gemäß der Erfindung während eines fliegendes Rollenwechsels.

### Bevorzugte Ausführungsformen der Erfindung

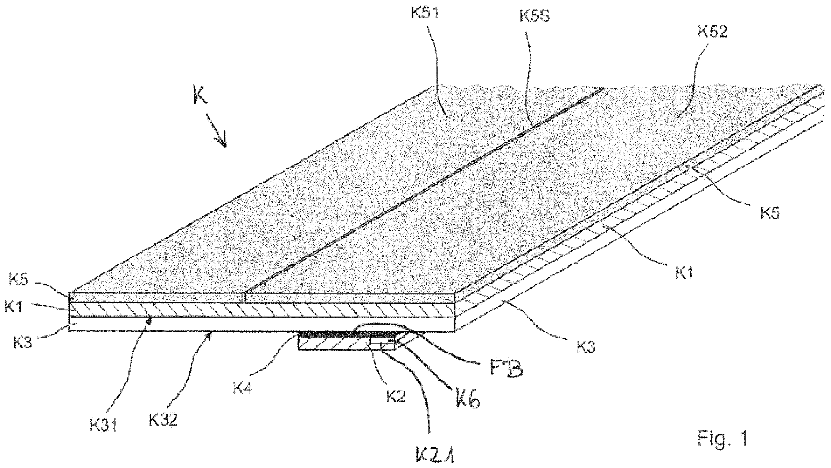

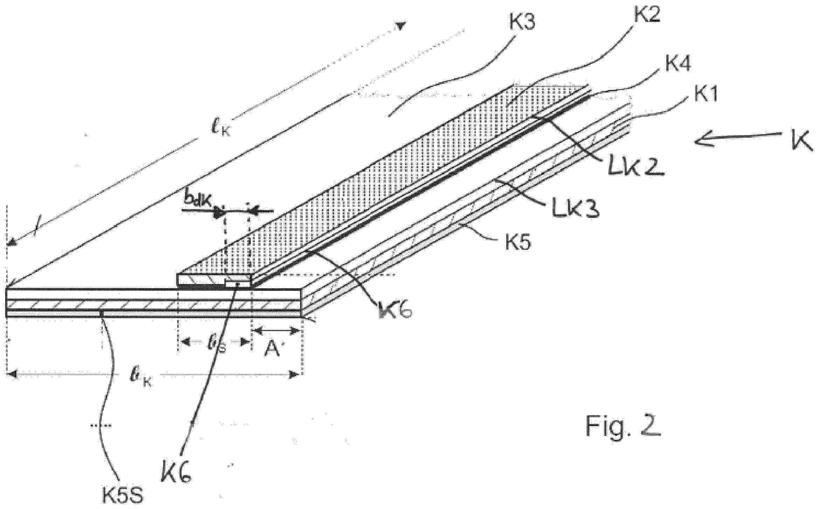

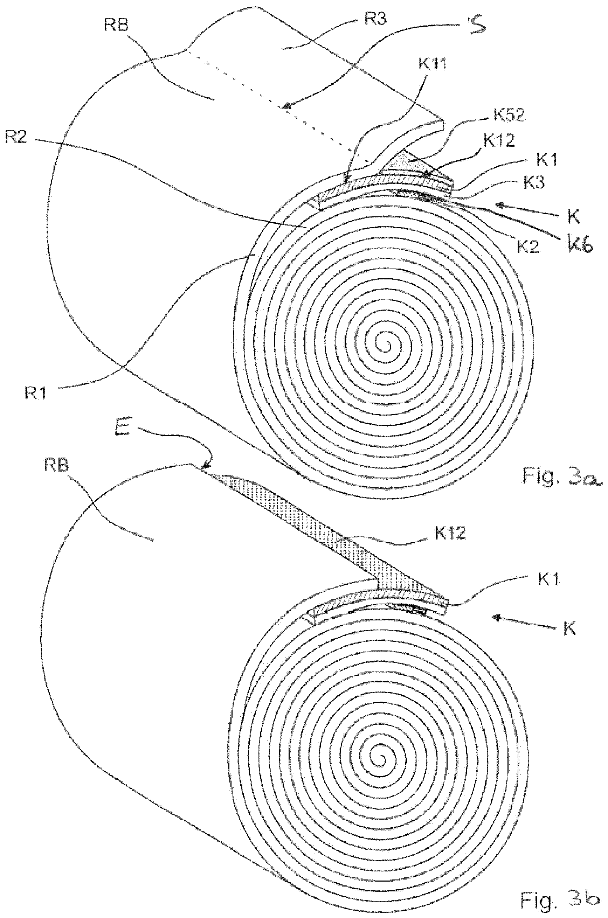

Fig. 1 und 2 zeigen schematisch ein Klebeband K, welches auf einem wie in Fig. 3a bis 3e gezeigten Flachbahnmaterial RB, das auf einer Rolle R aufgewickelt ist, angeordnet werden kann.

Das Klebeband K weist eine Trägerschicht K3 auf. Die Trägerschicht K3 weist eine erste Oberfläche K31 und eine der ersten Oberfläche K31 gegenüberliegende zweite Oberfläche K32 auf.

Auf der ersten Oberfläche K31 ist eine erste Klebmassenschicht K1 angeordnet. Die erste Klebmassenschicht K1 kann mittelbar oder unmittelbar auf der Trägerschicht K3 angeordnet sein. Unmittelbar bedeutet in diesem Zusammenhang, dass die erste Klebmassenschicht K1 direkt auf der Trägerschicht K3 aufliegt. Mittelbar bedeutet, dass zwischen der Trägerschicht K3 und der ersten Klebmassenschicht K1 eine oder mehrere weitere Schichten, wie beispielsweise Funktionsschichten - etwa für eine Detektierung des Klebebandes K durch entsprechende vorgesehene Detektoren mittels geeigneter Schichten, wie zum Beispiel Lackschichten, Metallschichten (z.B. Aluminiumschichten, etc.) oder anderer funktionelle Additive (wie Farbstoffe, Metallpulver, Getter usw.) enthaltende Schichten -, weitere Klebmassenschichten, Folienschichten, Schichten aus textilen Materialien, Schichten zur Haftverbesserung zwischen der ersten Oberfläche K31 der Trägerschicht K3 und der ersten Klebmassenschicht K1 und dergleichen vorgesehen sein können. Bei der hier gezeigten Ausgestaltung ist die erste Klebmassenschicht K1 unmittelbar auf der Trägerschicht K3 bzw. der ersten Oberfläche K31 der Trägerschicht K3 angeordnet. Dabei ist die erste Klebmassenschicht K1 vollflächig auf der ersten Oberfläche K31 der Trägerschicht K3 angeordnet. Es ist aber auch möglich, dass die erste Klebmassenschicht K1 nur auf bestimmten Abschnitten der ersten Oberfläche K31 der Trägerschicht K3 und damit teilflächig auf dieser angeordnet ist, so dass zwei oder mehr erste Klebmassenschichten K1 nebeneinander vorliegen können.

Bei der hier gezeigten Ausgestaltung ist auf der ersten Klebmassenschicht K1 eine Trennabdeckung K5 angeordnet, die eine Perforation oder einen Schlitz K5S in Längsrichtung I_{K} des Klebebands K aufweist, so dass die Trennabdeckung K5 zumindest bereichsweise durchgeschnitten sein kann. Die Trennabdeckung K5 kann beispielsweise ein silikonisiertes Trennpapier oder aber auch eine Trennfolie sein.

Auf der zweiten Oberfläche K32 der Trägerschicht K3 ist eine zweite Klebmassenschicht K2 angeordnet, welche mittelbar auf der Trägerschicht K3 angeordnet ist, da zwischen der zweiten Klebmassenschicht K2 und der Trägerschicht K3 eine Oberflächenbeschichtung K4 angeordnet ist. Die Oberflächenbeschichtung K4 und die zweite Klebmassenschicht K2 sind auf einem Flächenbereich FB der zweiten Oberfläche K32 der Trägerschicht K3 angeordnet, welcher kleiner ist als die Gesamtfläche der zweiten Oberfläche K32 der Trägerschicht K3. Es ist aber auch möglich, dass die Oberflächenbeschichtung K4 die gesamte Oberfläche der Trägerschicht K3 abdeckt. Mittels der Oberflächenbeschichtung K4 kann eine Sollbruchfläche zum flächigen Spalten des Klebebands K geschaffen werden, wobei die Sollbruchfläche dem Flächenbereich FB entspricht, auf welchem die Oberflächenbeschichtung K4 zusammen mit der zweiten Klebmassenschicht K2 angeordnet ist. Dabei ist der Flächenbereich FB und damit die Sollbruchfläche kleiner als die Klebmassenschicht K2. Vorzugsweise ist FB = K2 - K6. Die Oberflächenbeschichtung K4 ist größer oder gleich der Fläche der zweiten Klebmassenschicht K2.

Da die Spaltung des Klebebandes K in der Oberflächenbeschichtung K4 oder zwischen der Oberflächenbeschichtung K4 und der Trägerschicht K3, nicht aber innerhalb der Trägerschicht K3 stattfindet, ist man in Bezug auf die Wahl des Materials der Trägerschicht K3 grundsätzlich nicht eingeschränkt. Voraussetzung ist lediglich, dass sich auf der Trägerschicht K3 eine Oberflächenbeschichtung K4 vorsehen lässt, die entweder hinreichend geringe Adhäsionskräfte zur Oberfläche K32 der Trägerschicht K3 aufweist oder hinreichend geringe innere Kohäsionskräfte aufweist, so dass die Haftung der zweiten Klebmassenschicht K2 auf dieser Oberflächenbeschichtung K4 höher ist als zumindest eine der vorgenannten Kräfte.

Als Trägerschicht K3 können grundsätzlich Papiere, Folien - z.B. aus Kunststoffen -, Vliese, Mehrschichtlaminate - z.B. aus mehreren Papieren oder mehreren Folienmaterialien oder Papier(en) und Folie(n) - eingesetzt werden. Laminate aus zumindest einer Schicht eines üblichen Trägerschichtmaterials - wie Papier und/oder Kunststoff - mit einer Metallfolienschicht (wie insbesondere Aluminium) können ebenfalls eingesetzt werden.

Als Oberflächenbeschichtung K4 kann auf die Oberfläche K32 der Trägerschicht K3 eine Schicht einer chemischen Substanz aufgebracht sein, zum Beispiel ein Bindemittel. Die chemische Substanz kann beispielweise in Form einer Lösung oder einer Dispersion aufgebracht und danach getrocknet werden, so dass eine trockene Schicht (zum Beispiel durchgängiger Film oder poröse Beschichtung) vorliegt, die auf der Oberfläche K32 der Trägerschicht K3 aufliegt. Durch Wahl der Aufbringungsart, der chemischen Substanz und der Konzentration der Lösung, Suspension oder Dispersion kann die Adhäsion des Films der Oberflächenbeschichtung K4 zu der Oberfläche K32 der Trägerschicht K3 beeinflusst werden.

Es ist auch möglich, dass die Lösung, Suspension bzw. Dispersion zur Ausbildung der Oberflächenbeschichtung K4 in die Oberfläche K32 der Trägerschicht K3 eindringt. Dies kann insbesondere für die Ausführungsformen von Interesse sein, bei der die Sollbruchfläche innerhalb der Oberflächenbeschichtung K4 liegt und diese im Spaltvorgang durch einen Kohäsionsbruch spaltet.

Als Trägerschicht K3 kann ein gestrichenes Papier eingesetzt sein oder es kann eine solche Trägerschicht K3 verwendet werden, die an ihrer einen Oberfläche ein gestrichenes Papier aufweist.

Um eine geschlossene Oberfläche und eine bessere Bedruckbarkeit zu erzielen, wird auf Papiere - wie etwa Streichrohpapiere - häufig eine Streichmasse (auch als Streichfarbe bezeichnet) gleichmäßig aufgebracht, etwa durch Rakel-, Walzen-, Bürsten-, Düsenbeschichtung (beispielweise Luftdüsenbeschichtung), oder beispielsweise durch Vorhangguss ("Curtain Coating"). Die so erhaltene Oberflächenbeschichtung wird auch als "Strich" bezeichnet, das behandelte Papier als "gestrichenes Papier". Papiere können ein- oder beidseitig gestrichen sein.

Die einsetzbaren Streichfarben setzen sich üblicherweise zusammen aus mehreren der folgenden Hauptbestandteile: Wasser, Pigmente (in der Regel mineralische Weißpigmente bzw. Weißminerale), Dispergiermittel für Pigmente (in der Regel Polyacrylate), Bindemittel (in der Regel synthetische Acrylat- oder Styrol-Butadien-Copolymere), Stärke, Verdickungsmittel (in der Regel Methylcellulose-Derivate oder Acrylat-Copolymere), Additive zur Regulierung der Viskosität und des Wasserrückhaltevermögens, Kalandrierhilfsmittel (z.B. Wachse), Trennmittel (zum Beispiel Polyvinylalkohol), Hilfsmittel zur Verminderung des Nassabriebes, Nuancierfarbstoffe (zum Beispiel optische Aufheller), Schaumverhütungsmittel, Biozide. Der Feststoffanteil beträgt in einer Streichfarbe üblicherweise etwa 65 bis 70 Gew.%, davon fast 90 % Pigmente. Der Bindemittelanteil liegt üblicherweise bei 10 bis 15 Gew.% (bezogen auf die Trockensubstanz), über den Bindemittelanteil lassen sich insbesondere die für den Spaltvorgang in der Sollbruchstelle relevanten Eigenschaften beeinflussen (wie beispielsweise die Neigung zu adhäsiver oder kohäsiver Trennung usw.). Alle anderen Additive werden üblicherweise in geringen Konzentrationen (insbesondere unter 1 Gew.%) zugegeben. Die Auswahl der Pigmente kommerziell erhältlicher Papiere richtet sich nach den Qualitätsanforderungen der gestrichenen Papiere, zum Beispiel Weiße, Opazität, Glätte, Glanz, Rupffestigkeit, Bedruckbarkeit.

Als Material für die Streichmasse kann eine chemische Zusammensetzung verwendet werden, deren Hauptbestandteil ein oder mehrere Mineralien - wie beispielweise Kreide (Calciumcarbonat), Talkum, Porzellanerde (Kaolin, zum Beispiel China Clay) -, ein oder mehrere Proteinabkömmlinge - wie beispielsweise Kasein -, ein oder mehrere Polysaccharide - wie beispielweise Stärke -, ein oder mehrere Kunststoffpartikeln oder eine Mischung zweier oder mehrerer Vertreter der vorgenannten Substanzen ist. Weiterhin können zusätzlich oder stattdessen Spezialpigmente, wie Satinweiß (Calciumaluminatsulfat) oder calcinierte Clays eingesetzt werden.

Als Bestandteil der chemischen Zusammensetzung für die Streichmasse können insbesondere zumindest zum Teil, bevorzugt als Hauptbestandteil, also zu mehr als 50 %, weiter bevorzugt auch ausschließlich, solche Komponenten ausgewählt werden, die blättchenförmig und/oder schichtförmig vorliegen. Dies lässt sich insbesondere vorteilhaft durch Wahl geeigneter Mineralien realisieren. Blättchen- bzw. schichtförmige Substanzen, insbesondere Mineralien, haben eine solche Struktur, dass die Wechselwirkungen zwischen den Bausteinen nicht in allen Dimensionen vergleichbar, sondern innerhalb einer Ebene (Schicht) größer als zwischen den Ebenen sind (Definition nach Römpp). Die unterschiedliche Wechselwirkung zeigt sich in unterschiedlichen Atomabständen und führt zu einer meist blätterigen Spaltbarkeit. Bekannte Beispiele für solche Verbindungen sind Graphit, Montmorillonit und Glimmer. Die gleitfähigen Schichten, die entweder eben, wie in Graphit, oder gewellt, wie in Phyllosilicaten, sind, können leicht parallel gegeneinander verschoben werden. Die Wahl blättchen- bzw. schichtförmiger Bestandteile der Streichmasse kann zu einer besonders guten Regulierbarkeit der Spaltbarkeit im Sinne der erfinderischen Lehre genutzt werden.

Besonders vorteilhaft werden Streichmassen auf Basis von Kaolin, insbesondere in Blättchenform, und/oder auf Basis von Titandioxid eingesetzt, da sich hierfür eine besonders gute Verträglichkeit mit den Klebmassen gezeigt hat.

Besonders gut können solche ein- oder beidseitig gestrichenen Papiere eingesetzt werden. Da die Grenzfläche zwischen Papier und Strich oder der Strich selbst die Sollbruchfläche des Systems darstellt, ist es vorteilhaft, ein nur einseitig gestrichenes Papier zu wählen.

Für das Trägermaterial können handelsübliche mit Strich versehene Papiere eingesetzt werden, deren Strich im Laufe des Spliceprozesses an den mit einer zweiten Klebmasse versehenen Oberflächen des Trägers abgespalten werden kann.

Alternativ können ungestrichene Papiere jedoch auch erst für den Einsatz als Trägermaterial für das erfindungsgemäße Klebeband mit einem Strich versehen werden, oder es wird ein bereits mit einem Strich versehenes Papier mit einer weiteren Oberflächenbeschichtung versehen, wobei die Spaltung während des Spliceprozesses insbesondere zwischen dem ursprünglichen - ersten - Strich und der weiteren Oberflächenbeschichtung stattfinden kann.

Auch wenn die Spaltung - wie vorstehend ausgeführt - zwischen dem ersten Strich und der Trägeroberfläche stattfindet, kann es vorteilhaft sein, durch eine weitere Behandlung der gestrichenen Oberfläche die Verankerung der zweiten Klebmassenschicht und dem Strich zu erhöhen, insbesondere durch physikalische Methoden wie Corona- oder Plasmabehandlung oder durch chemische Methoden wie Primerung.

Als chemische Substanz für die Oberflächenbeschichtung kommen weiterhin vorteilhaft auch solche chemischen Zusammensetzungen in Frage, wie sie als Kaschiermassen beispielweise in der Schriften EP 1 076 026 A und EP 2 116 581 A beschrieben sind.

Solche Kaschiermassen enthalten üblicherweise neben einem Binder schwach trennwirksame und bei Bedarf auch elastifizierende Zusätze. Durch Wahl von Art und Menge des Binders können die Spalteigenschaften (insbesondere die Tendenz zu kohäsiven oder adhäsiven Bruch) vorteilhaft beeinflusst werden.

Eine hervorragend einsetzbare Zusammensetzung, wie sie die EP 1 076 026 A beschreibt, enthält neben einem Binder schwach trennwirksame silikonfreie und bei Bedarf auch elastifizierende Zusätze. Als Binder können zum Beispiel modifizierte Stärken verwendet werden, oder Bindemittel, wie sie für Nassklebebänder seit langem in Gebrauch sind. Als Trennmittel können zum Beispiel Talkum, Stearylderivate wie Ca-Stearat oder Dispersionen von - insbesondere silikon- und fluorfreien - polymeren Trennmitteln, wie z.B. Dispersionen auf Basis von Copolymeren aus Stearylmethacrylat oder Stearylderivaten der Maleinsäure mit Styrol, eingesetzt werden. Als Elastifiziermittel, die optional zugesetzt werden können, können zum Beispiel wasserlösliche Polyglykole dienen. Insbesondere wässrige Zubereitungen mit 10 bis 90 Gew.-% Bindemittel und 10 bis 90 Gew.-% Trennmittel sowie bis zu 60 Gew.-% Elastifiziermittel können als Masse zur Herstellung der Oberflächenbeschichtung verwendet werden. Bevorzugt werden als Bindemittel Stärkederivate, zum Beinspiel anionische Kartoffelstärke, in Anteilen von 30 bis 70 Gew.-% eingesetzt. Als Trennmittel werden vorzugsweise Talkum, Ca-Stearat und/oder trennwirksame Copolymere mit Stearylgruppen in Anteilen von 30 bis 80 Gew.-% verwendet. Zur Elastifizierung haben sich - insbesondere wasserlösliche - Polypropylen- oder Polyethylenglykole vorzugsweise in Mengen zwischen 0 bis 15 Gew.-% als gut geeignet erwiesen. Dabei werden die höher molekularen, bei Raumtemperatur festen Produkte vorrangig verwendet. Weitere in größeren Anteilen gut einsetzbare Elastifizierungsmittel sind Gummi Arabicum und Kunststoffe mit ähnlichem Eigenschaftsprofil. Der Masse können Füllstoffe und/oder Verdickungsmittel zugesetzt sein, insbesondere in einem Anteil bis zu 30 Gew.-%.

Eine weitere hervorragend zur Erzeugung der Oberflächenbeschichtung einsetzbare Zusammensetzung umfasst zumindest eine Polysaccharidkomponente und eine Tensidkomponente. Solche Zusammensetzungen sind in der EP 2 116 581 A beschrieben und lassen sich auch für die vorliegende Erfindung gut nutzen. Als Zusammensetzung für die Oberflächenbeschichtung wird dabei eine solche Masse eingesetzt, die neben einem Bindemittel, insbesondere einer Polysaccharidkomponente, zumindest eine Tensidkomponente umfasst, die insbesondere als Trennmittel dient. Die Tensidkomponente kann ein einziges Tensid sein, es kann aber auch eine Tensidkomponente aus zwei oder mehreren Tensiden eingesetzt werden. Die Zusammensetzung kann bei Bedarf vorteilhaft weitere Komponenten, wie insbesondere auch elastifizierende Zusätze (im Folgenden auch Elastifiziermittel) umfassen. Die Polysaccharidkomponente ist in einer sehr bevorzugten Vorgehensweise Stärke, Gummi Arabicum oder Derivate der vorgenannten Verbindungen. Die Bindemittelkomponente kann weiterhin auch beispielsweise ein Stearat, insbesondere Magnesium- und Kalziumstearat, sein. Die Bindemittelkomponente kann auch derart zusammengesetzt sein, dass eine Mischung aus Stärke mit einem oder mehreren weiteren Bindemitteln eingesetzt wird. Erfindungsgemäß besonders bevorzugte Zusammensetzungen haben einen Polysaccharidanteil von bis zu 98 Gew.-%, besonders bevorzugt von bis zu 85 bis 95 Gew.-%, noch besser von 90 bis 95 Gew.-%. Besonders bevorzugt lassen sich Stärkederivate einsetzen, insbesondere Hydroxypropylether auf Basis von Kartoffelstärke. Eine solche Stärke ist beispielsweise erhältlich von der Firma Emslandstärke unter der Bezeichnung Emsol K55. Der Tensidgehalt beträgt sehr bevorzugt 2 bis 20, besser 5 bis 15, am besten 5 bis 10 Gew.-%. Die vorstehenden Anteilsangaben beziehen sich sowohl für die Polysaccharidkomponente als auch für die Tensidkomponente auf die Mischung aus Tensid und Polysaccharid, und zwar jeweils in Form der auf den Feststoffanteil bezogenen Menge. Weiterhin ist noch Lösungsmittel, insbesondere Wasser, zugegen, bevorzugt in Anteilen von 50 bis 80 %. Insbesondere kann man derart vorgehen, indem man das feste Tensid in eine 20 bis 40 %ige wässrige Lösung der Polysaccharidkomponente gibt. Als weitere Additive können auch hier beispielsweise Talkum, Ca-Stearat und/oder trennwirksame Copolymere mit Stearylgruppen in Anteilen von 30 bis 80 Gew. % verwendet. Zur Elastifizierung haben sich Polypropylen- oder Polyethylenglykole vorzugsweise in Mengen zwischen 0 bis 15 Gew.% als gut geeignet erwiesen. Dabei werden die höher molekularen, bei Raumtemperatur festen Produkte vorrangig verwendet. Weitere in größeren Anteilen gut einsetzbare Elastifizierungsmittel sind Gummi Arabicum und Kunststoffe mit ähnlichem Eigenschaftsprofil.

Die erste Klebmassenschicht K1 und/oder die zweite Klebmassenschicht K2 können als Selbstklebmassen ausgebildet sein. Als Selbstklebmassen - auch als Haftklebmassen, englisch: PSA = "pressure sensitive adhesives" bezeichnet - werden insbesondere solche polymeren Klebmassen angesehen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen, hier insbesondere an den Flachbahnmaterialien, bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Klebmasse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebmassen gehen unter anderem insbesondere auf deren viskoelastische Eigenschaften zurück.

Die für die erste Klebmassenschicht K1 verwendete Klebmasse wird bevorzugt mit einem hohen Tack (Anfassklebrigkeit) gewählt, während für zweite Klebmassenschicht K2 vorteilhaft eine scherfeste (Selbst-)Klebmasse eingesetzt wird.

Als Selbstklebmassen können Systeme auf Acrylatbasis eingesetzt werden, beispielsweise als Reinacrylat-Klebmassen (Homopolymere und Copolymere, jeweils ausschließlich auf Basis von Acrylat- und/oder Methacrylatmonomeren; sogenannte 100-%-Systeme), als Klebmassen auf Basis von Copolymeren aus acrylischen Monomeren - Acrylate, Methacrylate - und nicht acrylischen Monomeren, oder als Klebmassen auf Basis von Abmischungen, enthaltend zumindest zwei Vertreter aus der Liste umfassend Rein-Polyacrylate, Copolymere aus acrylischen Monomeren und nicht acrylischen Monomeren sowie (Co-)Polymere nur aus nicht-acrylischen Monomeren. Es können vorteilhaft sowohl wasserlösliche als auch wasserunlösliche Acrylate eingesetzt werden. Insbesondere vorteilhaft sind auch in Wasser polymerisierte Acrylate (Waterborne-Systeme) einsetzbar.

Weiterhin lassen sich auch Natur- und Synthesekautschukmassen, Klebemassen auf Silikonbasis als auch Dispersionen der vorstehend beschriebenen Verbindungen einsetzen.

Gut einsetzbar sind auch Mischungen, ggf. mehrphasig, verschiedener Typen von Haftklebemassen, etwa beispielsweise Mischungen von kautschukbasierten Klebemassen (Naturkautschuk und/oder Synthesekautschuk) mit Acrylatklebemassen oder Mischungen aus Naturkautschuk mit Synthesekautschuk. Auch Mischungen aus verschiedenen Komponenten, gewählt aus der Gruppe der Silikonklebmassen, der Kautschuksysteme (Naturkautschuk und/oder Synthesekautschuk) und/oder der Acrylatsysteme sind einsetzbar.

Es sei darauf verwiesen, dass prinzipiell alle Basistypen von Haftklebmassen, welche für derartige Verklebungen geeignet sind, eingesetzt werden können. Vorteilhaft werden repulpierbare - insbesondere nach Messmethode TAPPI UM 213 (TAPPI Useful Methods 213, issued 2012) repulpierbare - Klebemassen eingesetzt, also solche Klebemassen, die bei der Wiederaufbereitung des Flachbahnmaterials, insbesondere von Papier, weitgehend oder vollständig in die Pulpe eingebracht werden können, also in den in Wasser gelösten beziehungsweise aufgeschwemmten Papier- oder Faserbrei.

Die zweite Klebmassenschicht K2 ist in Form eines Streifens aufgebracht, wobei sich die zweite Klebmassenschicht K2 parallel zu einem sich in Längsrichtung I_{K} des Klebebands K erstreckenden Kantenbereichs LK3 der Trägerschicht K3 erstreckt. Dabei ist die zweite Klebmassenschicht K2 mit einem Abstand A zu dem sich in Längsrichtung I_{K} des Klebebands K erstreckenden Kantenbereich LK3 der Trägerschicht K3 angeordnet. Der als Einrückung ausgebildete Abstand A kann bis zu 10 mm groß sein, bevorzugt zwischen 0,5 bis 5 mm, sehr bevorzugt zwischen 1 bis 3 mm groß sein. Insbesondere kann der Abstand A 2 mm betragen.

Durch die Wahl der Breite bs der zweiten Klebmassenschicht K2 lässt sich die Spaltarbeit, die aufgewandt werden muss, um die Sollbruchfläche vollständig zu spalten, unabhängig von der Breite des Hauptträgers K3 einstellen. Dies ist ein Vorteil zu den Systemen, bei denen sich die Sollbruchfläche vollflächig über die Breite b_{K} des Klebebands K erstreckt.

Zur Überwindung der Spaltfestigkeit an der vorderen Kante wird eine erhöhte, maximale Kraft zum Anspalten des Spaltsystems benötigt (Anspaltkraft). Des Weiteren benötigt man eine Kraft auf niedrigerem Niveau zum Spalten über die gesamte Breite des Spaltstreifens (Weiterspaltkraft). Die Anspaltkraft muss so hoch eingestellt sein, dass das Produkt durch die bei der Beschleunigung wirkenden Fliehkräfte und aerodynamischen Kräfte nicht vorzeitig öffnet, zum anderen muss die Weiterspaltkraft so gering eingestellt sein, dass das komplette Durchspalten des Spaltsystems nicht zu Bahnabrissen führt. Ein wesentlicher Qualitätsfaktor ist die konstante Weiterspaltkraft des Spaltstreifens, die auf einem definierten Niveau in engen Grenzen eingestellt ist.

Um das Abspaltverhalten der Sollbruchfläche zu verbessern, ist an einer in Richtung Trägerschicht K3 zeigenden Oberfläche K21 der zweiten Klebmassenschicht K2 ein deaktivierter Klebebereich K6 ausgebildet. Durch den deaktivierten Klebebereich K6 kann ein Riss gezielt in die Sollbruchfläche eingeleitet werden. Der deaktivierte Klebebereich K6 weist keine Klebwirkung auf, so dass in dem deaktivierten Klebebereich K6 keine stoffschlüssige Verbindung zwischen der zweiten Klebmassenschicht K2 und der Oberflächenbeschichtung K4 und/oder der Trägerschicht K3 ausgebildet ist.

Wie insbesondere in Fig. 2 zu erkennen ist, ist der deaktivierte Klebebereich K6 angrenzend zu dem sich in Längsrichtung I_{K} des Klebebands K erstreckenden Kantenbereich LK2 der zweiten Klebmassenschicht K2 angeordnet, so dass der deaktivierte Klebebereich K6 bündig an den Kantenbereich LK2 der zweiten Klebmassenschicht K2 anschließt.

Der deaktivierte Klebebereich K6 erstreckt sich dabei über die gesamte Länge der zweiten Klebmassenschicht K2. Der deaktivierte Klebebereich K6 weist dabei die Form eines Streifens auf. Es ist aber auch möglich, dass der deaktivierte Klebebereich K6 sich nur über einen Teilbereich der Länge der zweiten Klebmassenschicht K2 erstreckt. Weiter ist es auch möglich, dass der deaktivierte Klebebereich K6 eine Wellenform aufweist.

Wie in Fig. 2 zu erkennen ist, weist der deaktivierte Klebebereich K6 eine Breite b_{dK} auf, welche kleiner ist als die Hälfte der Gesamtbreite bs der zweiten Klebmassenschicht K2. Dabei kann der deaktivierte Klebebereich K6 eine Breite von 0,5 mm ≤ b_{dK} ≤ 5 mm, bevorzugt von 1 mm ≤ b_{dK} ≤ 3 mm aufweisen. Besonders bevorzugt weist der deaktivierte Klebebereich eine Breite von 1,5 mm ≤ b_{dK} ≤ 2,5 mm auf.

Der deaktivierte Klebebereich K6 an der Oberfläche K21 der zweiten Klebmassenschicht K2 kann durch verschiedene Art und Weisen ausgebildet werden.

Beispielsweise kann der deaktivierte Klebebereich K6 durch Aufbringen einer Farbe oder eines Lacks auf die in Richtung Trägerschicht K3 zeigende Oberfläche K21 der zweiten Klebmassenschicht K2 ausgebildet sein. Weiter kann der deaktivierte Klebebereich K6 durch Aufbringen eines bahnförmigen, nicht klebenden Materialstreifens auf die in Richtung Trägerschicht K3 zeigende Oberfläche K21 der zweiten Klebmassenschicht K2 ausgebildet sein. Ferner kann der deaktivierte Klebebereich K6 durch Aufbringen eines Pudermaterials auf die in Richtung Trägerschicht K3 zeigende Oberfläche K21 der zweiten Klebmassenschicht K2 ausgebildet sein. Auch ist es möglich, dass der deaktivierte Klebebereich K6 durch Übervernetzung mittels einer Bestrahlung der in Richtung Trägerschicht K3 zeigenden Oberfläche K21 der zweiten Klebmassenschicht K2 ausgebildet ist. Die Bestrahlung der Oberfläche K21 der zweiten Klebmassenschicht K2 erfolgt vorzugsweise mittels eines ultravioletten Lichts, um den Vernetzungsvorgang der Oberfläche K21 der zweiten Klebmassenschicht K2 auszulösen. Bei dieser Ausgestaltung wird eine Klebmassenschicht K2 verwendet, welche mittels UV-Strahlung vernetzbar ist. Durch die Vernetzung der Oberfläche K21 der zweiten Klebmassenschicht K2 kann in den Bereichen der Bestrahlung die Klebwirkung der zweiten Klebmassenschicht K2 aufgehoben werden, so dass der deaktivierte Klebebereich K6 ausgebildet werden kann.

In den Fig. 3a bis 3e ist beispielhaft ein fliegender Rollenwechsel gezeigt, wobei insbesondere die Vorbereitung und Durchführung eines fliegenden Rollenwechsels des Flachbahnmaterials RB mittels des erfindungsgemäßen Klebebands K gezeigt wird. Fliegende Rollenwechsel können insbesondere so durchgeführt werden, dass zunächst die neue Rolle R eines Flachbahnmaterials RB vorbereitet wird, indem der die oberste Wicklung bildende Flachbahnabschnitt R1 der neuen Rolle R auf den die zweite Wicklung bildendenden Flachbahnabschnitt R2 der neuen Rolle R mit einem erfindungsgemäßen Klebeband K fixiert wird.

Zuerst wird das Klebeband K auf den Flachbahnabschnitt R2 aufgebracht. Dann wird die erste Klebmassenschicht K1 des Klebebandes K nur teilweise freigelegt. Dies kann geschehen, indem die darauf befindliche Trennabdeckung K5, wie in Fig. 1 zu erkennen ist, einen Schlitz oder eine Perforation K5S in Längsrichtung I_{K} des Klebebands K aufweist, so dass die Trennabdeckung K5 in zwei Teile K51, K52 geteilt wird bzw. eine Sollbruchstelle zur Erzeugung zweier Teile K51, K52 aufweist, und dann nur ein Teil der Trennabdeckung K51 abgezogen wird, so dass, wie in Fig. 3a zu erkennen ist, ein klebender Bereich K11 und ein nichtklebender K12 - weil abgedeckter -, jeweils in Längsrichtung I_{K} des Klebebandes K verlaufender Bereich der ersten Klebmassenschicht K1 verbleibt.

Dieses Klebeband K wird nun genutzt, um den die oberste Wicklung bildenden Flachbahnabschnitt R1 einer neuen Rolle R - die oberste Flachbahnlage - auf dem die zweitoberste Wicklung bildenden Flachbahnabschnitt R2 - die zweite Flachbahnlage - der neuen Rolle R zu verkleben. Zuerst wird die Klebmassenschicht K2 auf dem Flachbahnabschnitt R2 verklebt. Dann wird der Teilbereich der Trennabdeckung K51 aufgedeckt und der Flachbahnabschnitt R1 wird auf den freien Teilbereich des klebenden Bereichs K11 verklebt. Dadurch wird R1 mit R2 verbunden.

Die überstehende Fahne R3 des auf die erste Klebmassenschicht K1 verklebten Flachbahnabschnitts R1 wird dann im Bereich der gestrichelt dargestellten Linie S zum durch den verbliebenen Teil der Trennabdeckung K52 abgedeckten Bereich K12 der ersten Klebmassenschicht K1 abgelängt - abgeschnitten, abgerissen oder dergleichen -, so dass das dann entstandene Ende E des Flachbahnmaterials RB im Wesentlichen an der verbliebenen Trennabdeckung K52 der ersten Klebmassenschicht K1 des Klebebands K angrenzt. Dann kann der noch vorhandene Teil K52 der Trennabdeckung K5 abgezogen werden, so dass eine offenliegende Klebmassenoberfläche K12 vorliegt, die zur Verklebung mit der ablaufenden alten Flachbahn B genutzt werden kann, wie in Fig. 3b - 3e gezeigt ist. Vorteilhaft ist es dabei, wenn die Klebmassenoberfläche K12, in Laufrichtung des Flachbahnmaterials RB betrachtet, mindestens so breit ist wie der klebende Bereich K11.

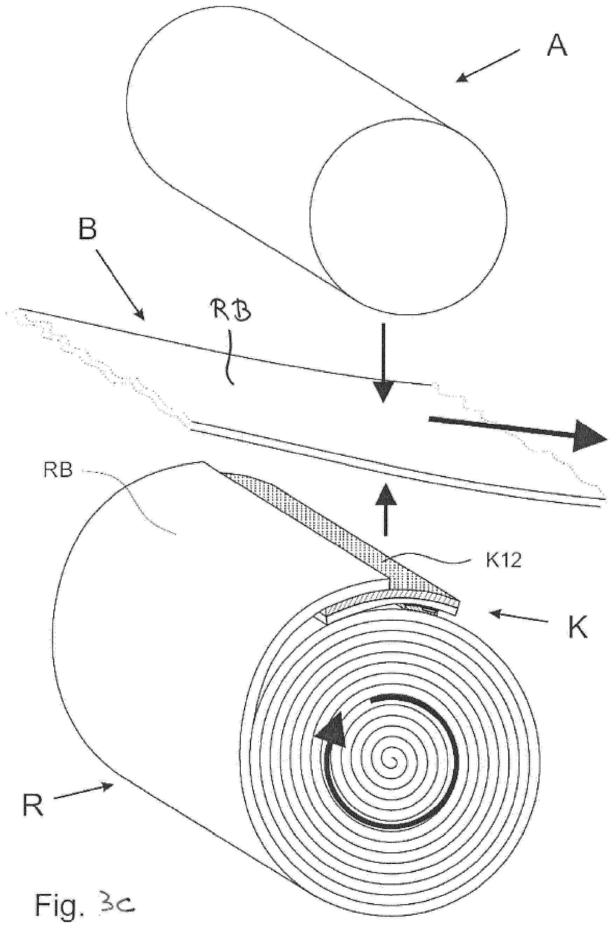

Wie in Fig. 3c zu erkennen ist, wird anschließend die so vorbereitete Rolle R neben eine fast gänzlich abgespulte zu ersetzende alte Rolle B platziert und auf die im Wesentlichen gleiche Umfangsgeschwindigkeit wie diese beschleunigt. Daraufhin wird sie gegen das Flachbahnmaterial RB der alten Rolle B, beispielsweise unter Zuhilfenahme eines Andruckzylinders A gedrückt, wobei der offenliegende Flächenbereich K12 der ersten Klebmassenschicht K1 des Klebebandes K mit dem Flachbahnmaterial RB der alten Rolle B bei im Wesentlichen gleichen Geschwindigkeiten der Rollen R, B verklebt wird. Dabei können auch verschiedene Materialien aneinander gespleißt werden.

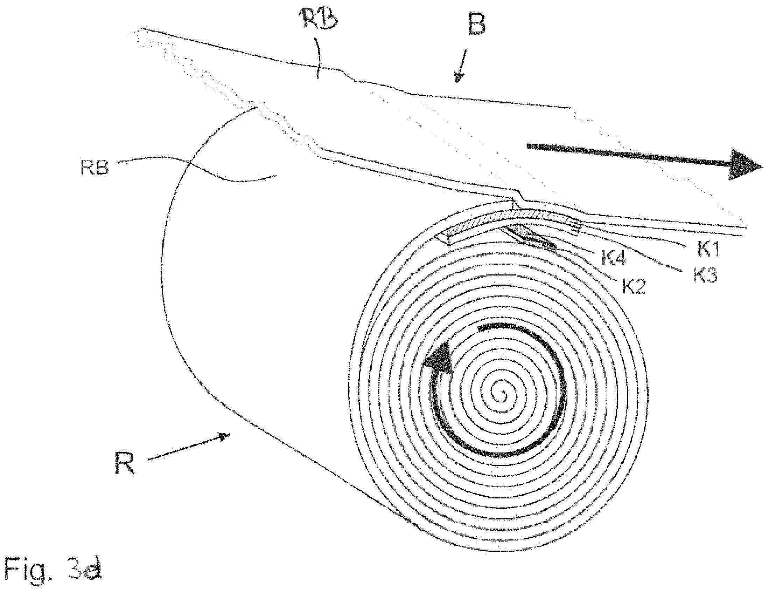

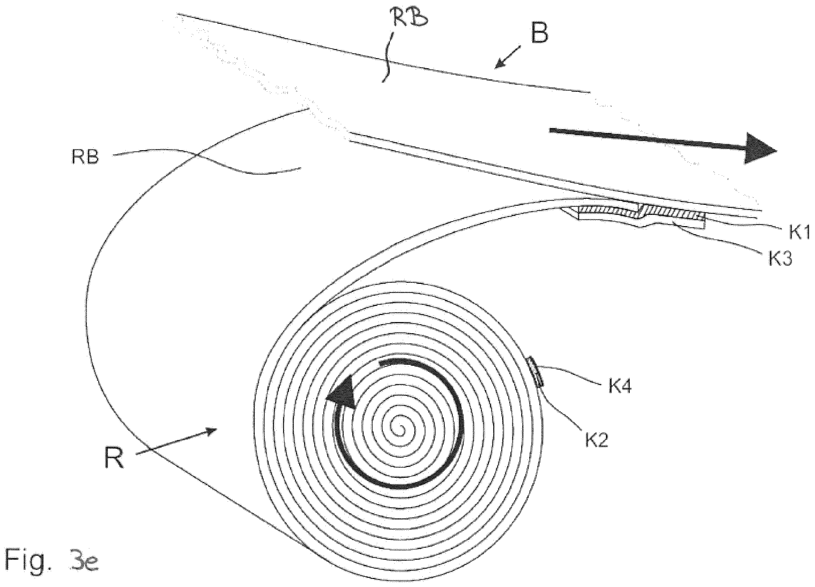

Zugleich oder unmittelbar nach der Verklebung mit dem Flachbahnmaterial RB der alten Rolle B öffnet sich das Klebeband K in der Sollbruchfläche FB, wie in Fig. 3d zu erkennen ist, so dass das Flachbahnmaterial RB der neuen Rolle R mit dem Flachbahnmaterial RB der alten Rolle B, an die sie angeklebt ist, in den Prozess eingefädelt werden kann, wie in Fig. 3e zu erkennen ist. Hierdurch kann ein kontinuierlicher Prozessablauf bei einem fliegenden Rollenwechsel sichergestellt werden.

Der abgespaltene Rest der Oberflächenbeschichtung K4 deckt die zweite Klebmassenschicht K2 nach dem Spalten vollständig ab, damit es im weiteren Maschinendurchlauf nicht zu Verklebungen kommt.

## Patentansprüche

1. Klebeband (K) für den fliegenden Rollenwechsel von auf Rollen (R, B) aufgewickeltem Flachbahnmaterial (RB), mit
einer Trägerschicht (K3), welche eine erste Oberfläche (K31) und eine der ersten Oberfläche (K31) gegenüberliegende zweite Oberfläche (K32) aufweist,
einer ersten Klebmassenschicht (K1), welche auf der ersten Oberfläche (K31) der Trägerschicht (K3) mittelbar oder unmittelbar zumindest teilflächig angeordnet ist,
einer zweiten Klebmassenschicht (K2), welche auf zumindest einem Flächenbereich (FB) der zweiten Oberfläche (K32) der Trägerschicht (K3) angeordnet ist, und mindestens einer Sollbruchfläche zum flächigen Spalten des Klebebands (K),
wobei die Sollbruchfläche derart ausgebildet ist, dass der zumindest eine Flächenbereich (FB) eine Oberflächenbeschichtung (K4) aufweist, welche zwischen der Trägerschicht (K3) und der zweiten Klebmassenschicht (K2) angeordnet ist,
wobei die Adhäsionskräfte der zweiten Klebmassenschicht (K2) zur Oberflächenbeschichtung (K4) größer sind als die Adhäsionskräfte der Oberflächenbeschichtung (K4) zur Trägerschicht (K3), und/oder
wobei die Adhäsionskräfte der zweiten Klebmassenschicht (K2) zur Oberflächenbeschichtung (K4) größer sind als die Kohäsionskräfte innerhalb der Oberflächenbeschichtung (K4),
**dadurch gekennzeichnet, dass** die zweite Klebmassenschicht (K2) an einer in Richtung Trägerschicht (K3) zeigenden Oberfläche (K21) einen deaktivierten Klebebereich (K6) aufweist.

2. Klebeband (K) nach Anspruch 1, **dadurch gekennzeichnet, dass** der deaktivierte Klebebereich (K6) angrenzend zu einem sich in Längsrichtung (I_{K}) des Klebebands (K) erstreckenden Kantenbereich (LK2) der zweiten Klebmassenschicht (K2) angeordnet ist.

3. Klebeband (K) nach Anspruch 1 oder 2, **dadurch gekennzeichnet, dass** die zweite Klebmassenschicht (K2) beabstandet zu einem sich in Längsrichtung (I_{K}) des Klebebands (K) erstreckenden Kantenbereich (LK3) der Trägerschicht (K3) angeordnet ist.

4. Klebeband (K) nach einem der Ansprüche 1 bis 3, **dadurch gekennzeichnet, dass** sich der deaktivierte Klebebereich (K6) über die gesamte Länge oder über einen Teilbereich der Länge der zweiten Klebmassenschicht (K2) erstreckt.

5. Klebeband (K) nach einem der Ansprüche 1 bis 4, **dadurch gekennzeichnet, dass** der deaktivierte Klebebereich (K6) eine Breite b_{dK} aufweist, welche kleiner ist als die Hälfte der Gesamtbreite bs der zweiten Klebmassenschicht (K2).

6. Klebeband (K) nach einem der Ansprüche 1 bis 5, **dadurch gekennzeichnet, dass** der deaktivierte Klebebereich (K6) eine Breite von 0,5 mm ≤ b_{dK} ≤ 5 mm aufweist.

7. Klebeband (K) nach Anspruch 6, **dadurch gekennzeichnet, dass** der deaktivierte Klebebereich (K6) eine Breite von 1 mm ≤ b_{dK} ≤ 3 mm aufweist.

8. Klebeband (K) nach Anspruch 7, **dadurch gekennzeichnet, dass** der deaktivierte Klebebereich (K6) eine Breite von 1,5 mm ≤ b_{dK} ≤ 2,5 mm aufweist.

9. Klebeband (K) nach einem der Ansprüche 1 bis 8, **dadurch gekennzeichnet, dass** der deaktivierte Klebebereich (K6) durch Aufbringen einer Farbe oder eines Lacks auf die in Richtung Trägerschicht (K3) zeigende Oberfläche (K21) der zweiten Klebmassenschicht (K2) ausgebildet ist.

10. Klebeband (K) nach einem der Ansprüche 1 bis 8, **dadurch gekennzeichnet, dass** der deaktivierte Klebebereich (K6) durch Aufbringen eines bahnförmigen, nicht klebenden Materialstreifens auf die in Richtung Trägerschicht (K3) zeigende Oberfläche (K21) der zweiten Klebmassenschicht (K2) ausgebildet ist.

11. Klebeband (K) nach einem der Ansprüche 1 bis 8, **dadurch gekennzeichnet, dass** der deaktivierte Klebebereich (K6) durch Aufbringen eines Pudermaterials auf die in Richtung Trägerschicht (K3) zeigende Oberfläche (K21) der zweiten Klebmassenschicht (K2) ausgebildet ist.

12. Klebeband (K) nach einem der Ansprüche 1 bis 8, **dadurch gekennzeichnet, dass** der deaktivierte Klebebereich (K6) durch Übervernetzung mittels einer Bestrahlung der in Richtung Trägerschicht (K3) zeigende Oberfläche (K21) der zweiten Klebmassenschicht (K2) ausgebildet ist.

13. Flachbahnmaterial (RB), welches auf eine Rolle (R, B) aufgewickelt ist, wobei das Flachbahnmaterial (RB) ein Klebeband (K) nach einem der Ansprüche 1 bis 12 aufweist.

14. Verwendung eines nach einem der Ansprüche 1 bis 12 ausgebildeten Klebebands (K) für einen fliegenden Rollenwechsel.

## Claims

1. Adhesive tape (K) for on-the-fly roll changeover of flat web material (RB) wound up into rolls (R, B), having
a carrier layer (K3), which comprises a first surface (K31) and a second surface (K32) opposite the first surface (K31),
a first layer of adhesive (K1), which is disposed indirectly or directly over at least part of the area on the first surface (K31) of the carrier layer (K3),
a second layer of adhesive (K2), which is disposed on at least one areal region (FB) of the second surface (K32) of the carrier layer (K3), and
at least one predetermined breakage area for the areal splitting of the adhesive tape (K),
where the predetermined breakage area is configured such that the at least one areal region (FB) comprises a surface coating (K4), which is disposed between the carrier layer (K3) and the second layer of adhesive (K2),
where the forces of adhesion of the second layer of adhesive (K2) to the surface coating (K4) are greater than the forces of adhesion of the surface coating (K4) to the carrier layer (K3), and/or
where the forces of adhesion of the second layer of adhesive (K2) to the surface coating (K4) are greater than the forces of cohesion within the surface coating (K4),
**characterized in that** the second layer of adhesive (K2) has a deactivated bonding region (K6) on a surface (K21) that points in the carrier layer (K3) direction.

2. Adhesive tape (K) according to Claim 1, **characterized in that** the deactivated bonding region (K6) is disposed adjacently to an edge region (LK2) of the second layer of adhesive (K2), said edge region (LK2) extending in the longitudinal direction (l_{K}) of the adhesive tape (K).

3. Adhesive tape (K) according to Claim 1 or 2, **characterized in that** the second layer of adhesive (K2) is disposed at a distance from an edge region (LK3) of the carrier layer (K3), said edge region (LK3) extending in the longitudinal direction (l_{K}) of the adhesive tape (K).

4. Adhesive tape (K) according to any of Claims 1 to 3, **characterized in that** the deactivated bonding region (K6) extends over the entire length or over a sub-region of the length of the second layer of adhesive (K2).

5. Adhesive tape (K) according to any of Claims 1 to 4, **characterized in that** the deactivated bonding region (K6) has a width b_{dK} which is less than half the total width bₛ of the second layer of adhesive (K2).

6. Adhesive tape (K) according to any of Claims 1 to 5, **characterized in that** the deactivated bonding region (K6) has a width of 0.5 mm ≤ b_{dK} ≤ 5 mm.

7. Adhesive tape (K) according to Claim 6, **characterized in that** the deactivated bonding region (K6) has a width of 1 mm ≤ b_{dK} ≤ 3 mm.

8. Adhesive tape (K) according to Claim 7, **characterized in that** the deactivated bonding region (K6) has a width of 1.5 mm ≤ b_{dK} ≤ 2.5 mm.

9. Adhesive tape (K) according to any of Claims 1 to 8, **characterized in that** the deactivated bonding region (K6) is configured by applying an ink or a varnish to the surface (K21) of the second layer of adhesive (K2) that points in the carrier layer (K3) direction.

10. Adhesive tape (K) according to any of Claims 1 to 8, **characterized in that** the deactivated bonding region (K6) is configured by applying a web-like, non-adhesive strip of material to the surface (K21) of the second layer of adhesive (K2) that points in the carrier layer (K3) direction.

11. Adhesive tape (K) according to any of Claims 1 to 8, **characterized in that** the deactivated bonding region (K6) is configured by applying a powder material to the surface (K21) of the second layer of adhesive (K2) that points in the carrier layer (K3) direction.

12. Adhesive tape (K) according to any of Claims 1 to 8, **characterized in that** the deactivated bonding region (K6) is configured by overcrosslinking by irradiating the surface (K21) of the second layer of adhesive (K2) that points in the carrier layer (K3) direction.

13. Flat web material (RB) wound up into a roll (R, B), where the flat web material (RB) comprises an adhesive tape (K) according to any of Claims 1 to 12.

14. Use of an adhesive tape (K) configured according to any of Claims 1 to 12 for an on-the-fly roll changeover.

## Revendications

1. Ruban adhésif (K) pour le remplacement à la volée de rouleaux d'un matériau en longueur plat (RB) enroulé sur des rouleaux (R, B), comprenant :
une couche support (K3), qui présente une première surface (K31) et une deuxième surface (K32) opposée à la première surface (K31),
une première couche de masse adhésive (K1), qui est agencée directement ou indirectement sur la première surface (K31) de la couche support (K3) au moins sur une partie de la surface,
une deuxième couche de masse adhésive (K2), qui est agencée sur au moins une zone de surface (FB) de la deuxième surface (K32) de la couche support (K3), et
au moins une surface destinée à la rupture pour le clivage en surface du ruban adhésif (K),
la surface destinée à la rupture étant configurée de telle sorte que ladite au moins une zone de surface (FB) présente un revêtement de surface (K4), qui est agencé entre la couche support (K3) et la deuxième couche de masse adhésive (K2),
les forces d'adhésion de la deuxième couche de masse adhésive (K2) avec le revêtement de surface (K4) étant supérieures aux forces d'adhésion du revêtement de surface (K4) avec la couche support (K3), et/ou
les forces d'adhésion de la deuxième couche de masse adhésive (K2) avec le revêtement de surface (K4) étant supérieures aux forces de cohésion au sein du revêtement de surface (K4),
**caractérisé en ce que** la deuxième couche de masse adhésive (K2) présente une zone adhésive désactivée (K6) sur une surface (K21) orientée dans la direction de la couche support (K3).

2. Ruban adhésif (K) selon la revendication 1, **caractérisé en ce que** la zone adhésive désactivée (K6) est agencée adjacente à une zone de bord (LK2) de la deuxième couche de masse adhésive (K2) qui s'étend dans la direction longitudinale (l_{K}) du ruban adhésif (K).

3. Ruban adhésif (K) selon la revendication 1 ou 2, **caractérisé en ce que** la deuxième couche de masse adhésive (K2) est agencée espacée d'une zone de bord (LK3) de la couche support (K3) qui s'étend dans la direction longitudinale (l_{K}) du ruban adhésif (K).

4. Ruban adhésif (K) selon l'une quelconque des revendications 1 à 3, **caractérisé en ce que** la zone adhésive désactivée (K6) s'étend sur la longueur totale ou sur une zone partielle de la longueur de la deuxième couche de masse adhésive (K2).

5. Ruban adhésif (K) selon l'une quelconque des revendications 1 à 4, **caractérisé en ce que** la zone adhésive désactivée (K6) présente une largeur b_{dK}, qui est inférieure à la moitié de la largeur totale bₛ de la deuxième couche de masse adhésive (K2).

6. Ruban adhésif (K) selon l'une quelconque des revendications 1 à 5, **caractérisé en ce que** la zone adhésive désactivée (K6) présente une largeur de 0, 5 mm ≤ b_{dK} ≤ 5 mm.

7. Ruban adhésif (K) selon la revendication 6, **caractérisé en ce que** la zone adhésive désactivée (K6) présente une largeur de 1 mm ≤ b_{dK} ≤ 3 mm.

8. Ruban adhésif (K) selon la revendication 7, **caractérisé en ce que** la zone adhésive désactivée (K6) présente une largeur de 1,5 mm ≤ b_{dK} ≤ 2,5 mm.

9. Ruban adhésif (K) selon l'une quelconque des revendications 1 à 8, **caractérisé en ce que** la zone adhésive désactivée (K6) est formée par application d'une peinture ou d'un vernis sur la surface (K21) de la deuxième couche de masse adhésive (K2) orientée dans la direction de la couche support (K3).

10. Ruban adhésif (K) selon l'une quelconque des revendications 1 à 8, **caractérisé en ce que** la zone adhésive désactivée (K6) est formée par application d'une bande de matériau non adhésive en longueur sur la surface (K21) de la deuxième couche de masse adhésive (K2) orientée dans la direction de la couche support (K3) .

11. Ruban adhésif (K) selon l'une quelconque des revendications 1 à 8, **caractérisé en ce que** la zone adhésive désactivée (K6) est formée par application d'un matériau en poudre sur la surface (K21) de la deuxième couche de masse adhésive (K2) orientée dans la direction de la couche support (K3).

12. Ruban adhésif (K) selon l'une quelconque des revendications 1 à 8, **caractérisé en ce que** la zone adhésive désactivée (K6) est formée par sur-réticulation au moyen d'un rayonnement de la surface (K21) de la deuxième couche de masse adhésive (K2) orientée dans la direction de la couche support (K3).

13. Matériau en longueur plat (RB), qui est enroulé sur un rouleau (R, B), le matériau en longueur plat (RB) comprenant un ruban adhésif (K) selon l'une quelconque des revendications 1 à 12.

14. Utilisation d'un ruban adhésif (K) configuré selon l'une quelconque des revendications 1 à 12 pour un remplacement à la volée de rouleaux.
